# EUROPEAN PATENT SPECIFICATION

(11) **EP 3 945 021 B1**
(45) Date of publication and mention of the grant of the patent: **09.12.2026**
(21) Application number: 21188464.8
(22) Date of filing: 29.07.2021
(51) Int. Cl.: B64D 11/06

(54) **TRANSLATING, LOCKING, AND ROTATING LEG REST MECHANISM**
MECHANISMUS ZUM VERSCHIEBEN, VERRIEGELN UND DREHEN EINER BEINAUFLAGE
MÉCANISME DE TRANSLATION, DE VERROUILLAGE ET DE ROTATION DE REPOSE-JAMBES

(30) Priority: 29.07.2020 US 202016942490
(43) Date of publication of application: 02.02.2022
(73) Proprietor: B/E Aerospace, Inc., Winston-Salem, NC 27105 (US)
(72) Inventor: VANHOY, Mark, Hamptonville, NC (US); BLACKBURN, Troy, Elkin, NC (US)
(74) Representative: Dehns

(56) References cited:
- EP-A2- 1 564 139
- US-A- 5 560 681
- US-A1- 2013 313 882
- US-A1- 2015 284 092

## Description

### BACKGROUND

Foot and leg rest systems in aircraft seats are complicated to implement because space and weight limitations make traditional systems unsuitable. For automatic / electronic systems, multiple actuators and complicated control systems are required. Leg rest mechanisms are taught in US 2013/313882.

### SUMMARY

In one aspect, there is provided a leg rest apparatus as defined by independent claim 1.

In a further aspect, an aircraft seat is provided as defined by claim 7.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1 shows an environmental view of an aircraft seat including an exemplary embodiment;
FIG. 2A shows a perspective view of an aircraft leg rest according to an exemplary embodiment during a stage of deployment and retraction;
FIG. 2B shows a perspective view of an aircraft leg rest according to an exemplary embodiment during a stage of deployment and retraction;
FIG. 2C shows a perspective view of an aircraft leg rest according to an exemplary embodiment during a stage of deployment and retraction;
FIG. 2D shows a perspective view of an aircraft leg rest according to an exemplary embodiment during a stage of deployment and retraction;
FIG. 2E shows a perspective view of an aircraft leg rest according to an exemplary embodiment during a stage of deployment and retraction;
FIG. 2F shows a perspective view of an aircraft leg rest according to an exemplary embodiment during a stage of deployment and retraction;
FIG. 2G shows a perspective view of an aircraft leg rest according to an exemplary embodiment during a stage of deployment and retraction;
FIG. 3 shows a detail view of an exemplary embodiment;
FIG. 4 shows a detail view of an exemplary embodiment;
FIG. 5 shows a detail view of an exemplary embodiment;
FIG. 6 shows a detail view of an exemplary embodiment;
FIG. 7 shows a detail view of an exemplary embodiment;
FIG. 8 shows a detail view of an exemplary embodiment;
FIG. 9 shows a detail view of an exemplary embodiment;

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways, according to the scope of the appended claims. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure, according to the scope of the appended claims.

Broadly, embodiments of the inventive concepts disclosed herein are directed to a foot and leg rest deployment mechanism that prevents the leg rest from rotating into an upright, deployed orientation until fully translated. Likewise, the deployment mechanism prevents the leg rest from translating while in an upright orientation.

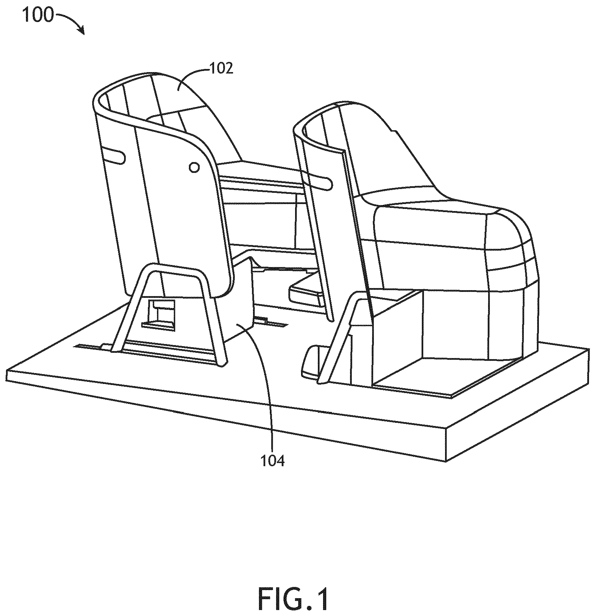

Referring to FIG. 1, an environmental view 100 of an aircraft seat 102 including an exemplary embodiment is shown. The aircraft seat 102 includes a deployable foot and leg rest 104. Because of space constraints, the foot and leg rest 104, including the deployment mechanisms, must be compact enough to fit within the footprint of existing aircraft seats. Furthermore, because of limited leg room, it is desirable that the foot and leg rest 104 be generally disposed beneath the aircraft seat 102 when stowed.

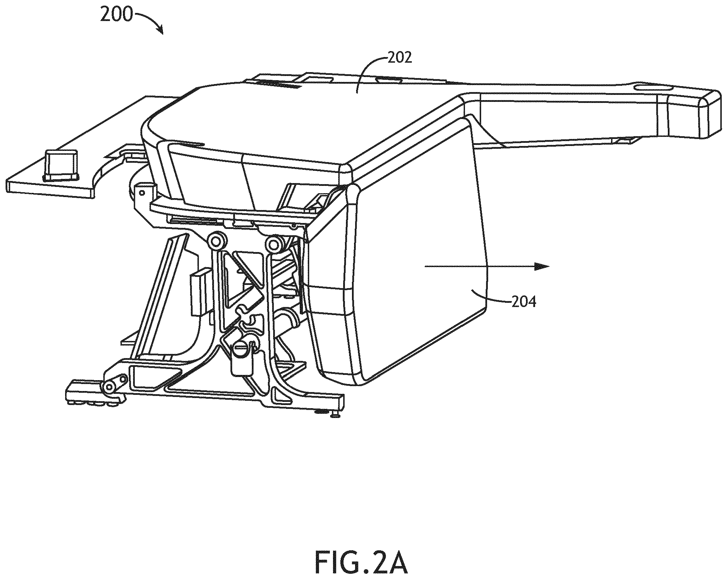

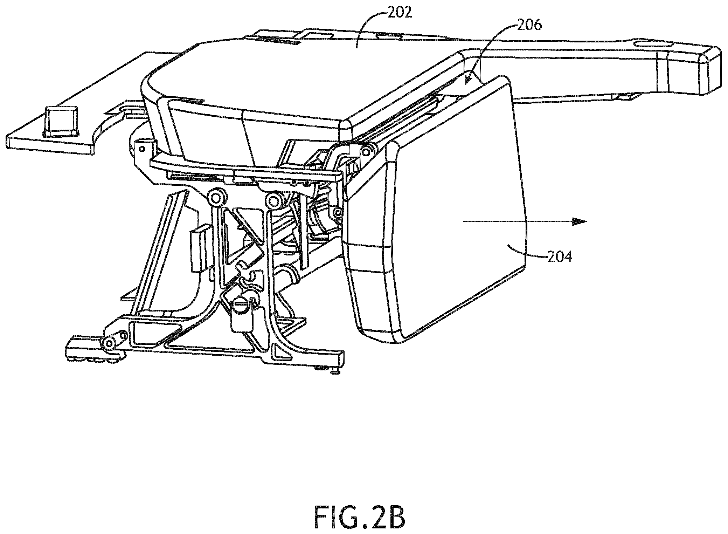

Referring to FIGS. 2A-2G, perspective views of an aircraft leg rest 204 according to an exemplary embodiment during stages of deployment and retraction are shown. An aircraft seat 200 including an embodiment of the present disclosure includes a seat portion 202 and a leg rest 204 that is completely disposed beneath the seat portion 202 when in a stowed configuration, such as in FIG. 2A. During deployment, the leg rest 204 first translates from beneath the seat potion 202, such as in FIG. 2B. Translation creates a separation 206 between the seat portion 202 and the leg rest 204 to facilitate rotation.

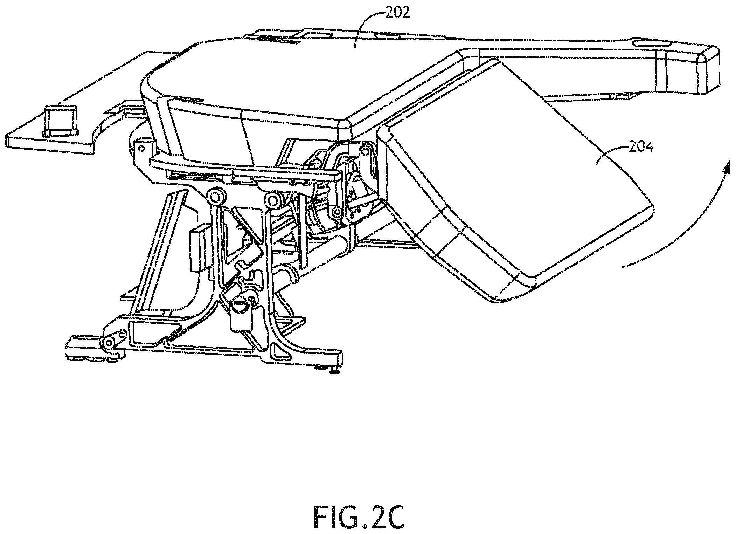

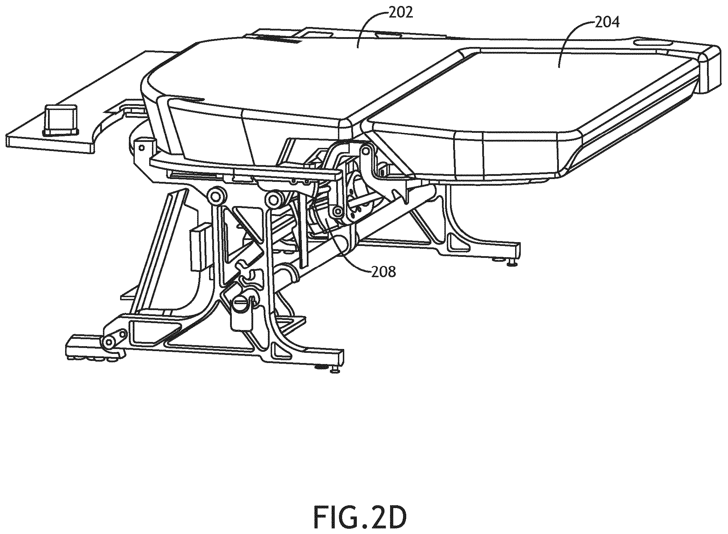

When translation is complete, a translation lock engages to prevent translation forward or backward, and releases a rotation arm to allow the leg rest 204 to begin rotating about a pivot point proximal to the seat portion 202, such as in FIG. 2C. When fully deployed, such as in FIG. 2D, the leg rest 204 and seat portion 202 align to form a substantially planar surface. In at least one embodiment, an actuator 208 that applies the force necessary to deploy the leg rest 204 also maintains the leg rest 204 in a deployed configuration.

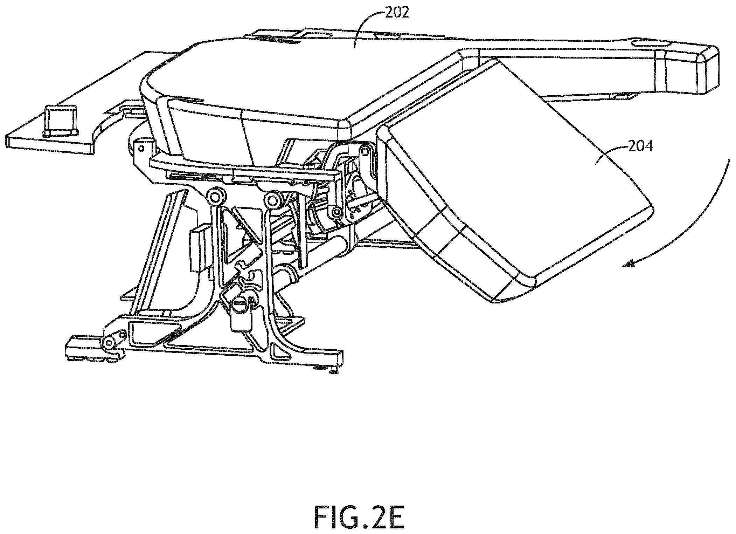

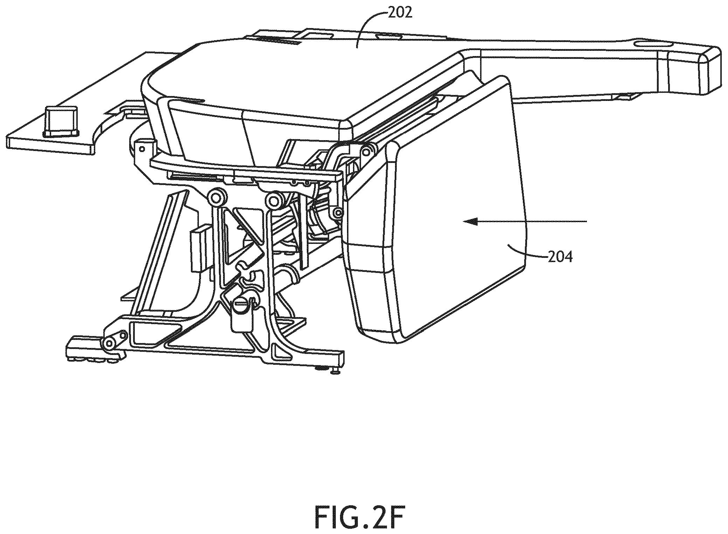

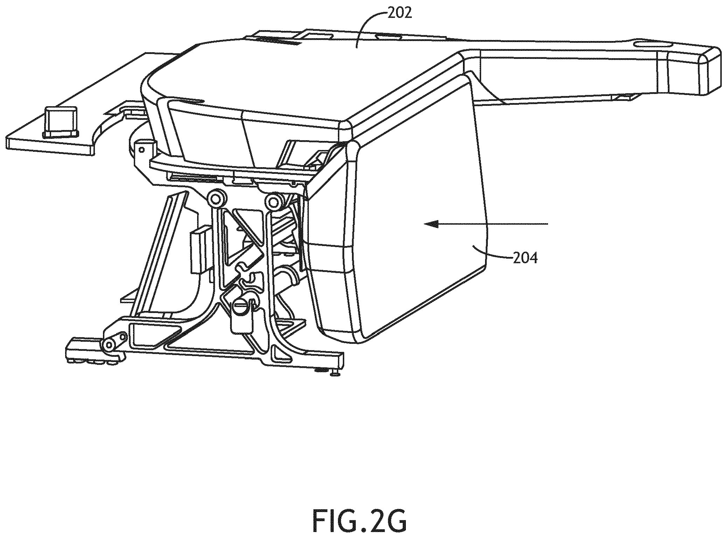

When returning to a stowed configuration, because the translation lock is engaged, the leg rest 204 must first rotate, such as in FIG. 2E. Once the leg rest 204 is in a substantially vertical orientation, such as in FIG. 2F, the rotation arm disengages a rotation lock from a translation locking portion of the translation lock so that rotational movement is now locked and translational movement is unlocked. The leg rest 204 may then be translated to a stowed configuration under the seat portion, such as in FIG. 2G.

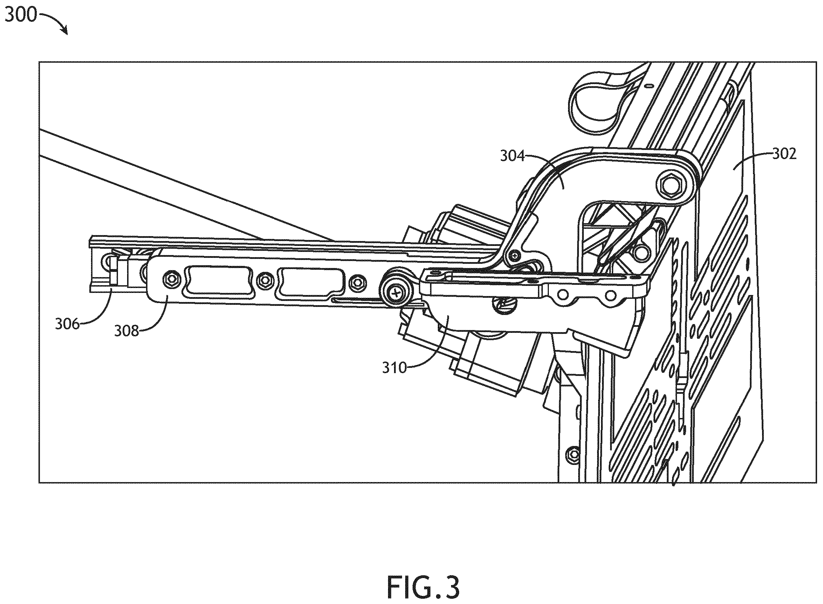

Referring to FIG. 3, a detail view of an exemplary embodiment is shown. An aircraft seat with a deployable leg rest 302 includes a deployment control mechanism 300 having at least one rotation arm 304 fixedly connected to the leg rest 302 such that the leg rest 302 and rotation arm 304 pivot together. It may be appreciated that, although embodiments described herein are directed to a leg rest 302, with singular locking mechanisms, such mechanisms may be mirrored in whole or in part on opposing sides of the leg rest 302.

In at least one embodiment, the rotation arm 304 and leg rest 302 are pivotably connected to a distal portion of a translation rail 308. The translation rail 308 translates linearly along a fixed rail 306 disposed on the structure of the aircraft seat. A translation lock 310 prevents the rotation arm 304 from rotating until the translation rail 308 is fully translated as more fully described herein.

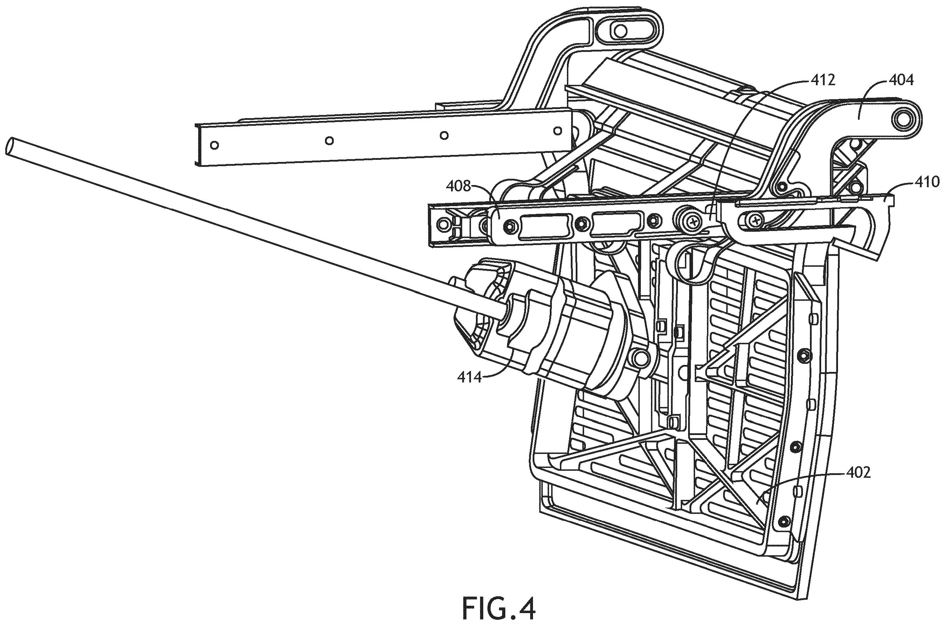

Referring to FIG. 4, a detail view of an exemplary embodiment is shown. The deployment control mechanism 400 includes a linear actuator 414 connected to the leg rest 402. In at least one embodiment, the linear actuator 414 may be rotatably connected to the leg rest 402 and rotatably connected to the structure of the aircraft seat such that the linear actuator 414 may continue to apply a linear force to the leg rest 402 at an angle sufficient to induce translation or rotation at each appropriate phase of deployment or stowage.

In at least one embodiment, the deployment control mechanism 400 includes a rotation lock 412 disposed on the translation rail 408, configured to engage the translation lock 410 and rotation arm 404 as more fully described herein.

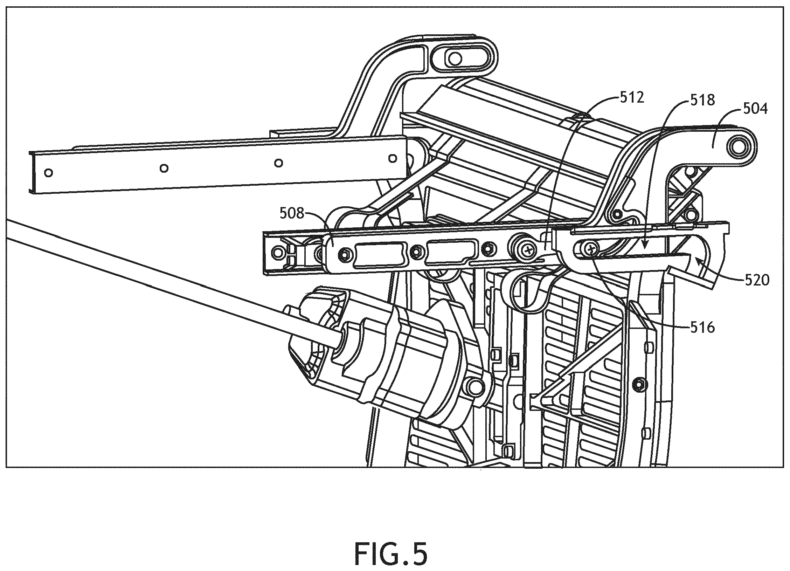

Referring to FIG. 5, a detail view of an exemplary embodiment is shown. A rotation lock 512 disposed on a translation rail 508 includes a translation channel engaging element 516 configured to engage a translation channel 518 defined by the translation lock 510. In at least one embodiment, the translation channel 518 defines a stowed orientation by limiting the maximum travel of the translation channel engaging portion 516. Furthermore, the translation channel 518 includes a translation locking portion 520 that receives the translation channel engaging portion 516 to lower the rotation lock 512 and disengage it from the rotation arm 504 and allow rotation.

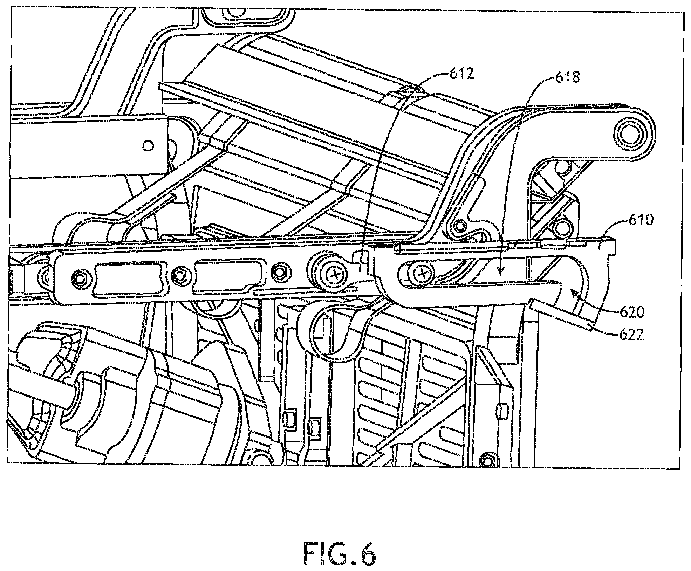

Referring to FIG. 6, a detail view of an exemplary embodiment is shown. In at least one embodiment, a translation lock 610 defining a translation channel with a translation locking portion 620 may include a service plate 622 disposed at an open terminus of the translation locking portion 620 to allow the translation channel engaging portion 616 of rotation lock 612 to be completely removed from the translation channel.

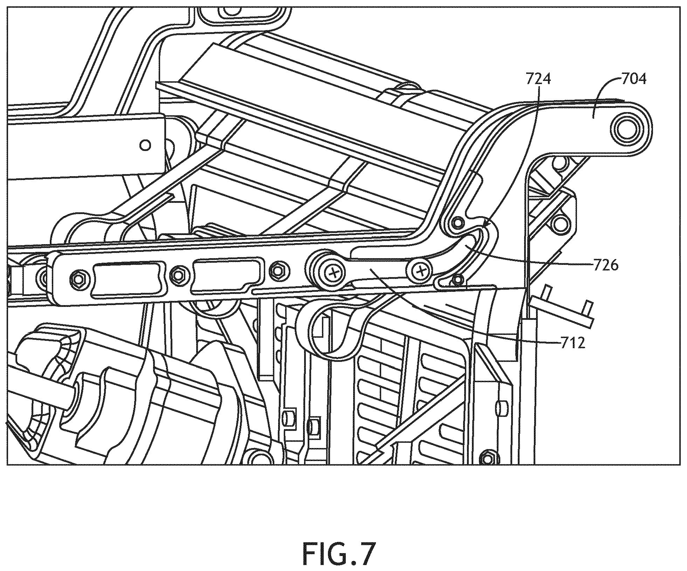

Referring to FIG. 7, a detail view of an exemplary embodiment is shown. In at least one embodiment, a rotation lock 712 includes a rotation arm engaging portion 726 configured to engage a rotation locking channel 724 defined by a rotation arm 704. When engaged in the rotation locking channel 724, the rotation arm engaging portion 726 prevents the rotation arm 704 from rotating.

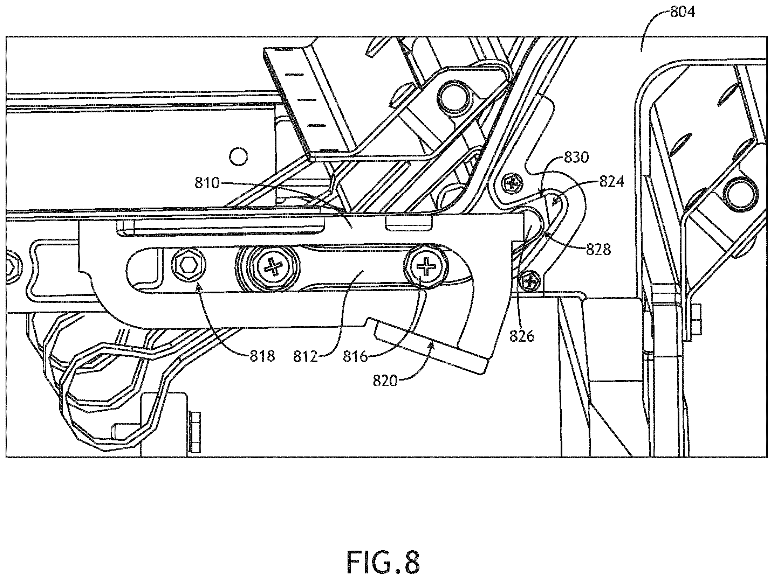

Referring to FIG. 8, a detail view of an exemplary embodiment is shown. In at least one embodiment, during deployment, a rotation arm 804 is prevented from rotating by a rotation arm engaging portion 826 of a rotation lock 812. The rotation arm engaging portion 826 abuts a rotation locking surface 830 that defines a portion of a rotation locking channel 824.

During translation, a translation channel engaging portion 816 of the rotation lock 812 travels along a translation channel 818 defined by a translation lock 810. The translation channel engaging portion 816 prevents the rotation arm engaging portion 826 from disengaging from the rotation locking surface 830.

When the leg rest is fully translated, the translation channel engaging portion 816 enters a translation locking portion 820 which releases the rotation arm engaging portion 826 from the rotation locking channel 824, thereby allowing the rotation arm 804 to rotate. At the same time, because the translation channel engaging portion 816 cannot travel in the translation channel 818, the leg rest is prevented from translating. In at least one embodiment, the rotation lock 812 may be biased toward the translation locking portion 820 such as by a spring.

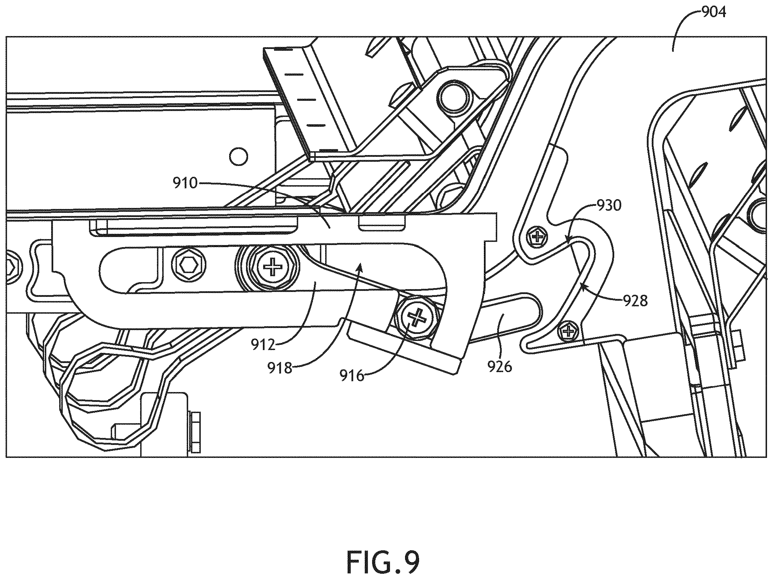

Referring to FIG. 9, a detail view of an exemplary embodiment is shown. During retraction and stowage, a rotation lock 912 with a translation channel engaging portion 916 in a translation locking portion 920 of a translation channel 918 defined by a translation lock 910 prevents the leg rest from translating (moving backwards toward the seat). A rotation arm 904 connected to the leg rest defines a rotation locking channel with a rotation locking surface 930 and a translation lock disengaging surface 928. As the leg rest (and thereby rotation arm 904) is rotated toward a stowed orientation, the translation lock disengaging surface 928 abuts a rotation arm engaging portion 926 and lifts a corresponding translation channel engaging portion 916 out of a translation locking portion of the translation channel 918. Once the translation channel engaging portion 916 is completely disengaged from the translation locking portion, the rotation arm 904 is locked from rotating because the rotation arm engaging portion 926 abuts the rotation locking surface 930. The leg rest may then translate to a stowed orientation under the seat.

It may be appreciated that while specific embodiments described herein are directed toward a leg rest, deployable by a single linear actuator, where the leg rest first translates and then rotates, other embodiments are envisioned. For example, by placing the translation locking portion of the translation channel on the other side of the translation channel (distal to the leg rest instead of proximal), the leg rest may first rotate and then translate while deploying.

It is believed that the inventive concepts disclosed herein and many of their attendant advantages will be understood by the foregoing description of embodiments of the inventive concepts disclosed, and it will be apparent that various changes may be made in the form, construction, and arrangement of the components thereof without departing from the scope of the invention as defined by the claims, and individual features from various embodiments may be combined to arrive at other embodiments, within the scope of the claims.

## Claims

1. A leg rest apparatus comprising:
a leg rest (304) configured to be deployed from a stowed position to a deployed position by, first, translating in a first, linear direction and then rotating about a pivot point to the deployed position;
a translation rail (508) having a distal end to which the leg rest (304) is pivotally connected, the translation rail configured to translate linearly along a fixed rail to which the translation is fixed, in use;
a rotation lock (812) disposed on the translation rail (508),
a rotation arm (804) defining a rotation locking channel (724) to prevent the rotation arm from rotating when engaged with the rotation lock;
a translation lock (410) defining a translation channel (518) along which the rotation lock moves during linear translation movement of the translation rail, the translation channel including a translation locking portion (820); and
wherein the rotation lock (812) comprises a rotation arm engaging portion (826) which abuts a rotation locking surface (830) that defines a portion of a rotation locking channel (824), and is configured such that:
during linear translation of the leg rest by linear translation of the translation rail, a translation channel engaging portion (816) of the rotation lock (812) travels along the translation channel (518) defined by the translation lock (410), wherein the translation channel engaging portion (816) is configured to prevent the rotation arm engaging portion (826) from disengaging from the rotation locking surface (830), and wherein:
when the translation channel engaging portion (816) reaches an end of the translation channel, the translation rail and the leg rest is fully translated and linear translation of the translation rail is locked by the rotation lock, the translation channel engaging portion (816) enters the translation locking portion (820) of the rotation lock which releases the rotation arm engaging portion (826) from the rotation locking channel (824), thereby allowing the rotation arm (804) to rotate, and, at the same time, because the translation channel engaging portion (816) cannot travel in the translation channel (818), the leg rest is prevented from translating;
wherein the rotation locking channel defines a translation unlocking surface (928) configured to apply a force to the rotation lock to disengage the rotation lock from the translation locking portion.

2. The leg rest apparatus of Claim 1, wherein the rotation lock is (412) configured to disengage from the rotation locking channel (724) when engaging the translation locking portion (520).

3. The leg rest apparatus of any preceding Claim, wherein the rotation lock (412) is disposed on the translation arm.

4. The leg rest apparatus of any preceding Claim, further comprising an actuator (414) configured to apply a linear force to a leg rest.

5. The leg rest apparatus of any preceding Claim, wherein the translation lock comprises a service plate (622) disposed over an open terminal of the translation locking portion, configured to be removed to disengage the rotation lock from the translation channel.

6. The leg rest apparatus of any preceding Claim, wherein the rotation arm is rotationally disposed on a terminus of the translation rail.

7. An aircraft seat comprising at least one leg rest apparatus as claimed in any preceding claim.

8. The aircraft seat apparatus of Claim 7, further comprising an actuator (414) configured to apply a linear force to the leg rest.

9. The aircraft seat apparatus of any of Claims 7 and 8, wherein the leg rest is substantially flush with a seat portion when fully deployed.

## Patentansprüche

1. Eine Beinstützenvorrichtung, umfassend:
eine Beinstütze (304), die konfiguriert ist, aus einer eingefahrenen Position in eine ausgefahrene Position überführt zu werden, indem sie zunächst in einer ersten, linearen Richtung verfährt und dann um einen Drehpunkt in die ausgefahrene Position dreht;
eine Translationsschiene (508) mit einem distalen Ende, mit dem die Beinstütze (304) schwenkbar verbunden ist, wobei die Translationsschiene konfiguriert ist, entlang einer feststehenden Schiene, an der die Translation im Gebrauch fixiert ist, linear zu verfahren;
eine Rotationssperre (812), die an der Translationsschiene (508) angeordnet ist,
einen Rotationsarm (804), der einen Rotationssperrkanal (724) definiert, um zu verhindern, dass der Rotationsarm rotiert, wenn er mit der Rotationssperre in Eingriff steht;
eine Translationssperre (410), die einen Translationskanal (518) definiert, entlang dem sich die Rotationssperre während der linearen Translationsbewegung der Translationsschiene bewegt, wobei der Translationskanal einen Translationssperrabschnitt (820) umfasst; und
wobei die Rotationssperre (812) einen Rotationsarm-Eingriffsabschnitt (826) umfasst, der an einer Rotationssperrfläche (830) anliegt, die einen Abschnitt eines Rotationssperrkanals (824) definiert, und derart konfiguriert ist, dass:
während der linearen Translation der Beinstütze durch lineare Translation der Translationsschiene ein Translationskanal-Eingriffsabschnitt (816) der Rotationssperre (812) entlang des von der Translationssperre (410) definierten Translationskanals (518) verfährt, wobei der Translationskanal-Eingriffsabschnitt (816) konfiguriert ist, zu verhindern, dass der Rotationsarm-Eingriffsabschnitt (826) sich von der Rotationssperrfläche (830) löst, und wobei:
wenn der Translationskanal-Eingriffsabschnitt (816) ein Ende des Translationskanals erreicht, die Translationsschiene und die Beinstütze vollständig ausgefahren sind und die lineare Translation der Translationsschiene durch die Rotationssperre gesperrt wird, der Translationskanal-Eingriffsabschnitt (816) in den Translationssperrabschnitt (820) der Rotationssperre eintritt, wodurch der Rotationsarm-Eingriffsabschnitt (826) aus dem Rotationssperrkanal (824) gelöst wird, sodass sich der Rotationsarm (804) drehen kann, und gleichzeitig, da der Translationskanal-Eingriffsabschnitt (816) sich nicht im Translationskanal (818) bewegen kann, die Beinstütze an einer Translation gehindert wird;
wobei der Rotationssperrkanal eine Translationsentsperrfläche (928) definiert, die konfiguriert ist, eine Kraft auf die Rotationssperre auszuüben, um die Rotationssperre aus dem Translationssperrabschnitt zu lösen.

2. Die Beinstützenvorrichtung nach Anspruch 1, wobei die Rotationssperre (412) konfiguriert ist, sich aus dem Rotationssperrkanal (724) zu lösen, wenn sie mit dem Translationssperrabschnitt (520) in Eingriff kommt.

3. Die Beinstützenvorrichtung nach einem der vorhergehenden Ansprüche, wobei die Rotationssperre (412) am Translationsarm angeordnet ist.

4. Die Beinstützenvorrichtung nach einem der vorhergehenden Ansprüche, ferner umfassend einen Aktuator (414), der konfiguriert ist, eine lineare Kraft auf eine Beinstütze auszuüben.

5. Die Beinstützenvorrichtung nach einem der vorhergehenden Ansprüche, wobei die Translationssperre eine Serviceplatte (622) umfasst, die über einem offenen Endstück des Translationssperrabschnitts angeordnet ist und konfiguriert ist, entfernt zu werden, um die Rotationssperre aus dem Translationskanal zu lösen.

6. Die Beinstützenvorrichtung nach einem der vorhergehenden Ansprüche, wobei der Rotationsarm drehbar an einem Endstück der Translationsschiene angeordnet ist.

7. Ein Flugzeugsitz, umfassend mindestens eine Beinstützenvorrichtung nach einem der vorhergehenden Ansprüche.

8. Der Flugzeugsitz nach Anspruch 7, ferner umfassend einen Aktuator (414), der konfiguriert ist, eine lineare Kraft auf die Beinstütze auszuüben.

9. Der Flugzeugsitz nach einem der Ansprüche 7 und 8, wobei die Beinstütze bei vollständiger Ausfahrung im Wesentlichen bündig mit einem Sitzabschnitt ist.

## Revendications

1. Appareil de repose-jambes comprenant :
un repose-jambes (304) configuré pour être déployé d'une position rangée à une position déployée en, premièrement, se translatant dans une première direction linéaire puis en pivotant autour d'un point de pivot vers la position déployée ;
un rail de translation (508) ayant une extrémité distale à laquelle le repose-jambes (304) est raccordé de manière pivotante, le rail de translation étant configuré pour se translater linéairement le long d'un rail fixe auquel la translation est fixée, en utilisation ;
un verrou de rotation (812) disposé sur le rail de translation (508),
un bras de rotation (804) définissant un canal de verrouillage de rotation (724) pour empêcher le bras de rotation de tourner lorsqu'il est engagé avec le verrou de rotation ;
un verrou de translation (410) définissant un canal de translation (518) le long duquel le verrou de rotation se déplace pendant le mouvement de translation linéaire du rail de translation, le canal de translation comprenant une portion de verrouillage de translation (820) ; et
dans lequel le verrou de rotation (812) comprend une portion d'engagement de bras de rotation (826) qui vient en butée contre une surface de verrouillage de rotation (830) qui définit une portion d'un canal de verrouillage de rotation (824), et est configuré de telle sorte que :
pendant la translation linéaire du repose-jambes par translation linéaire du rail de translation, une portion d'engagement de canal de translation (816) du verrou de rotation (812) se déplace le long du canal de translation (518) défini par le verrou de translation (410), dans lequel la portion d'engagement de canal de translation (816) est configurée pour empêcher la portion d'engagement de bras de rotation (826) de se désengager de la surface de verrouillage de rotation (830), et dans lequel :
lorsque la portion d'engagement de canal de translation (816) atteint une extrémité du canal de translation, le rail de translation et le repose-jambes sont entièrement translatés et la translation linéaire du rail de translation est verrouillée par le verrou de rotation, la portion d'engagement de canal de translation (816) entre dans la portion de verrouillage de translation (820) du verrou de rotation qui libère la portion d'engagement de bras de rotation (826) du canal de verrouillage de rotation (824), permettant ainsi au bras de rotation (804) de tourner, et, en même temps, du fait que la portion d'engagement de canal de translation (816) ne peut pas se déplacer dans le canal de translation (818), le repose-jambes est empêché de se translater ;
dans lequel le canal de verrouillage de rotation définit une surface de déverrouillage de translation (928) configurée pour appliquer une force au verrou de rotation pour désengager le verrou de rotation de la portion de verrouillage de translation.

2. Appareil de repose-jambes selon la revendication 1, dans lequel le verrou de rotation (412) est configuré pour se désengager du canal de verrouillage de rotation (724) lors de l'engagement avec la portion de verrouillage de translation (520).

3. Appareil de repose-jambes selon l'une quelconque des revendications précédentes, dans lequel le verrou de rotation (412) est disposé sur le bras de translation.

4. Appareil de repose-jambes selon l'une quelconque des revendications précédentes, comprenant en outre un actionneur (414) configuré pour appliquer une force linéaire à un repose-jambes.

5. Appareil de repose-jambes selon l'une quelconque des revendications précédentes, dans lequel le verrou de translation comprend une plaque de service (622) disposée sur une extrémité ouverte de la portion de verrouillage de translation, configurée pour être retirée afin de désengager le verrou de rotation du canal de translation.

6. Appareil de repose-jambes selon l'une quelconque des revendications précédentes, dans lequel le bras de rotation est disposé de manière rotative sur une extrémité terminale du rail de translation.

7. Siège d'aéronef comprenant au moins un appareil de repose-jambes selon l'une quelconque des revendications précédentes.

8. Appareil de siège d'aéronef selon la revendication 7, comprenant en outre un actionneur (414) configuré pour appliquer une force linéaire au repose-jambes.

9. Appareil de siège d'aéronef selon l'une quelconque des revendications 7 et 8, dans lequel le repose-jambes est sensiblement affleurant avec une portion de siège lorsqu'il est entièrement déployé.
